# EUROPEAN PATENT APPLICATION

(11) **EP 2 811 769 A1**
(43) Date of publication of application: **10.12.2014**
(21) Application number: 13305752.1
(22) Date of filing: 04.06.2013
(51) Int. Cl.: H04W 12/06, H04W 4/00

(54) **Method and system for accessing a service**

(71) Applicant: Gemalto SA, 92190 Meudon (FR)
(72) Inventor: Phan, Ly Thanh, 13705 La Ciotat (FR); Pauliac, Mireille, 13705 La Ciotat (FR)

(57) **Abstract**

The invention relates to a method 20 for accessing a service.

According to the invention, a first device 14 comprises at least one first memory 144. The first memory stores a first device identifier. A second device 18 comprises at least one second memory 184. The second device comprises or is connected to a user interface 162, 164. The second memory stores user authentication data and a user identifier. The method comprises the following steps. The first device sends to the second device a first message 22 including a request for accessing a service accompanied with the first device identifier. The second device prompts its user to enter, through the user interface, data. The second device verifies whether the entered data does or does not match the user authentication data. Only if the entered data matches the user authentication data, then the second device sends to a server 112 a second message 28 including a request for accessing a service accompanied with the first device identifier and the user identifier. The server sends to the second device a third message 210 including the first device identifier and data for accessing a service, as request response. And the second device sends to the first device a fourth message 212 including the data for accessing a service.

The invention also relates to a corresponding system.

## Description

### Field of the invention:

The invention relates generally to a method for accessing a service.

Moreover, the invention also pertains to a system for accessing a service.

The present invention is notably, but not exclusively, applicable to a smart card or the like, as secure element, Hosting Party Module (or HPM) and first device, that is coupled to a Femtocell, and another secure element, as second device, that is coupled to a mobile (tele)phone, as user terminal.

Within the present description, a secure element or termed token is a smart electronic object that is intended to communicate with the outside world.

### State of the art:

As known per se, when a user buys a Femtocell to access an Internet network, she/he is able to activate or use the Femtocell only due to the fact that she/he owns the Femtocell.

However, the user is not able to prove that it was not her/his intention to use the Femtocell.

There is a need to provide a solution that allows using the Femtocell while being able to prove the user intention.

### Summary of the invention:

The invention proposes a solution for satisfying the just hereinabove specified need by providing a method for accessing a service.

According to the invention, a first device comprises at least one first memory. The first memory stores a first device identifier. A second device comprises at least one second memory. The second device comprises or is connected to a user interface. The second memory stores user authentication data and a user identifier. The method comprises the following steps. The first device sends to the second device a first message including a request for accessing a service accompanied with the first device identifier. The second device prompts its user to enter, through the user interface, data. The second device verifies whether the entered data does or does not match the user authentication data. Only if the entered data matches the user authentication data, then the second device sends to a server a second message including a request for accessing a service accompanied with the first device identifier and the user identifier. The server sends to the second device a third message including the first device identifier and data for accessing a service, as request response. And the second device sends to the first device a fourth message including the data for accessing a service.

The principle of the invention consists in addressing from a first device a second device that accesses a user interface that is used for authenticating the first device user before addressing, through the second device, a server that sends, through the second device, to the first device data allowing to access a service.

The use of the user interface accessible through the second device, like a Subscriber Identity Module (or SIM) type token, allows the first device user to authenticate and to give, when authenticated, thereby her/his intention to use the first device, like an HPM.

The invention solution allows a first device user to prove her/his consent to use the first device by authenticating herself/himself through the user interface.

The invention solution allows the first device user to act voluntarily, so as to be recognized and to authorize thereby the use of the first device. The first device user is not able to repudiate the use of the first device since she/he has to give her/his approval, through her/his explicit authentication, to use the first device.

The invention solution is more secure than the known solution that is described herein above. As a matter of fact, for instance, a secure element, as first device, is able to use user reference data of a SIM type token, as second device, so as to authorize, through a user intervention, the use of the first device and thereby the use of another device coupled to the first device, like a Femtocell. Thus, besides the possible first device possession, the first device user has and/or knows specific data that is stored within the second device and that is needed to be supplied by her/him. According to a further aspect, the invention is a system for accessing a service.According to the invention, a first device comprises at least one first memor. The first memory stores a first device identifier. A second device comprises at least one second memory. The second device comprises or is connected to a user interface. The second memory stores user authentication data and a user identifier. The system comprises the first device, the second device and a server. The first device is adapted to send to the second device a first message including a request for accessing a service accompanied with the first device identifier.

The second device is adapted to
- prompt its user to enter, through the user interface, data;
- verify whether the entered data does or does not match the user authentication data;
- send to a server, only if the entered data matches the user authentication data, a second message including a request for accessing a service accompanied with the first device identifier and the user identifier.

The server is adapted to send to the second device a third message including the first device identifier and data for accessing a service, as request response.

And the second device is adapted to send to the first device a fourth message including the data for accessing a service.

The first device may be a Network Access Point (or NAP) or a token.

The second device may be a user terminal or a token that accesses a user interface.

As token, it may be any electronic device comprising at least one microprocessor, as data processing means, at least one memory (or being connected to at least one memory), and at least one Input/Output (or I/O) communication interface(s). The token may be constituted by any electronic medium, like a Secure Removable Module (or SRM). For example, the token may be embodied within a smart card or a dongle of the Universal Serial Bus (or USB) type, a Secure Digital card (or SD card), a Multi-Media Card (or MMC) or a chip to be fixed to a host, possibly in a removable manner. The token may have different form factors.

### Brief description of the drawings:

Additional features and advantages of the invention will be more clearly understandable after reading a detailed description of one preferred embodiment of the invention, given as an indicative and non-limitative example, in conjunction with the following drawings:
- Figure 1 illustrates a simplified diagram of one embodiment of a system comprising a first token, a second token and a server, the system being arranged to grant access to a service only when the token user is authenticated to the second token that is connected to the server, according to the invention; and
- Figure 2 represents an example of one message flow between the first token, the second token and the server of figure 1, so that, upon a service access request originating from the first token, the server issues, through the second token, to the first token data for accessing a service.

### Detailed description:

Herein under is considered a case in which the invention method for accessing a service is implemented by a smart card, as HPM and first token, that is coupled to a Femtocell and a SIM type smart card, as second token and second device, that is coupled to a mobile phone, as user terminal.

Naturally, the herein below described embodiment is only for exemplifying purposes and is not considered to reduce the scope of the present invention.

For instance, instead of being constituted by a smart card, the first token and/or the second token may be constituted by a dongle and/or any other electronic medium. According to still other embodiments, the first token and/or the second token is(are) a chip fixed to its(their respective) host device.

Instead of being constituted by a token, the second device may be a user terminal, like a handset, that carries out the functions that are carried out by the second token and that are infra described.

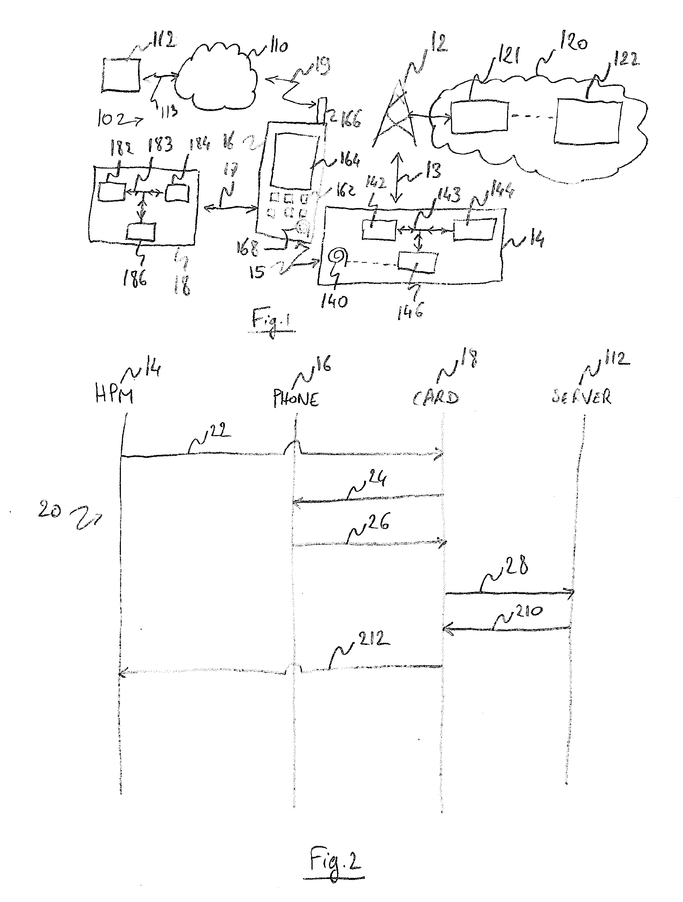

**Figure 1** shows schematically a system 10 for accessing a service provider network 120.

The service provider network 120 is accessible via a Femtocell 12, as a Network Access Point (or NAP).

The NAP may communicate, via a Radio-Frequency (or RF) link, with a user equipment, as a communicating entity. The NAP may have a radio coverage that is more or less large, so as to exchange data with the communicating entity.

The Femtocell 12 is connected, through a cable (not represented), to the service provider network 120.

Instead of being constituted by a Femtocell, the NAP may be constituted by a picocell, a Home (e)Node B, a home base station and/or a gateway.

The Femtocell 12, as a cellular base station, is intended to communicate, over a short range radio-communication link (not represented), like a Bluetooth (trademark) or Wifi link, with one or several entities, like a user equipment(s).

The Femtocell 12 may be located within a home of an individual or premises of an enterprise. The Femtocell 12 hosting party is preferably to be authenticated.

The Femtocell 12 may be portable and therefore movable.

The Femtocell 12 allows accessing from a connected entity, through the service provider network 120, to a first remote server 122, as service provider.

The first remote server 122 is e.g. an Over The Internet (or OTI) server.

The Femtocell 12 has a radio coverage that allows a user equipment(s), like a Personal Computer (or PC) (not represented), to access, over a short range RF link, through the Femtocell 12, as intermediary entity, the first remote server 122.

The Femtocell 12 includes all the electronic components (not represented) including data processing means, volatile and non volatile memories and several I/O interfaces.

The Femtocell 12 is controlled by a microprocessor, as data processing means.

The Femtocell 12 memories store data.

The Femtocell 12 includes one or several I/O interfaces with the service provider network 120, one or several I/O interfaces with one or several communicating entities, like one or several user equipments, and possibly one or several I/O interfaces with one or several tokens including an HPM 14, as smart card and first token.

A user accesses the PC, as user equipment, through a Man Machine Interface (or MMI), in order to be able to exploit, at least in part, one or several services accessible, via the Femtocell 12, through the service provider network 120. The user interacts with the MMI and operates the PC. The PC user may thus benefit from one or several services offered, via the Femtocell 12, by or through the service provider network 120.

As user equipment, instead of a PC, it may be any handheld computer, like a mobile phone, a Personal Digital Assistant (or PDA), a Voice over Internet Protocol handset, a netbook and/or a mobile laptop. The user equipment may consist of a set-top box, a desktop computer, a tablet, a media player, a game console, and/or a portable TeleVision set (or TV).

The Femtocell 12 is preferably connected to a box 121.

The box 121 is connected to the service provider network 120.

The Femtocell 12 is preferably electrically coupled to the HPM 14, as first device.

The Femtocell 12 needs preferably to use credentials stored within an HPM to authenticate to the service provider network 120, prior to an activation of the Femtocell radio-interface that is used for exchanging with a communicating entity that desires to access, via the service provider network 120, the first remote server 122.

The Femtocell 12 is connected typically, through a contact link 13, to the HPM 14.

Alternately, instead of a contact interface, the Femtocell 12 is connected, through a contact-less link, to the HPM 14. The contact-less link may be a Near-Field Communication (or NFC) type link, a Bluetooth type link, a Wifi type link, a Zigbee type link or any other short range RF link.

The contact link to the HPM 14 is typically an International Standard Organization (or ISO) type interface or a Universal Serial Bus (or USB) type interface. The contact link may be of any other type allowing to connect the HPM 14 to the Femtocell 12.

The HPM 14 is either attached to or detachable from the Femtocell 12 which the HPM 14 is associated with.

The HPM 14 is, for example, mechanically connected to either directly the Femtocell 12 or a physical element that is connected to the Femtocell 12.

The HPM 14 receives data from the outside world and sends data to the outside world.

The HPM 14 belongs to a user, as token user. The token user is preferably a mobile network operator subscriber.

The Femtocell 12 may also belong to the token user.

The HPM 14 is used for accessing one or several services. The service(s) may be provided from either the first remote server 122 or another entity, as a service provider, like a second remote server 112. The second remote server 112 is e.g. an Over The Air (or OTA) server.

The HPM 14 may be used for configuring the Femtocell 12 to operate.

The HPM 14 may have either no user interface or a limited user interface i.e. that does not allow the token user to enter data, so as to authenticate to the HPM 14.

The HPM 14 is carried by a medium, like a card. The medium may have a Quick Response (or QR) code, as optical machine readable data. The QR code may include a public key relating to the HPM 14.

The QR code is to be read, through a camera accessible by a second device. The QR code, is used for establishing a secure communication channel over a short range RF link, between the HPM 14 and an external communication entity, as HPM interlocutor and second device.

For instance, if the QR code includes an HPM public key, then the second device encrypts a session key with the public key of the HPM 14, and sends the encrypted session key to the HPM 14. Following communication between the HPM 14 and the second device, over the short range RF link is then encrypted with the session key that is thus shared between the HPM 14 and the HPM interlocutor.

According to another embodiment, the QR code has a symmetric key that is used by the second device to encrypt the short range RF communication with the HPM 14.

According to still another embodiment, the QR code has a password that the HPM interlocutor has to provide to the HPM 14 over a short range RF link, prior to further communication between the HPM 14 and the second device.

The HPM 14 incorporates at least one chip.

The HPM chip includes at least one microprocessor 142, as data processing means, at least one memory 144, also termed HPM memory, and at least two I/O interfaces 146 that communicate with the exterior of the chip.

The microprocessor 142 is linked, through an internal bidirectional data bus 143, to the HPM memory 144 and the I/O interfaces 146.

One HPM I/O interface 146 is connected to a contact-less antenna 140. Such an antenna 140 allows exchanging data, over a short range RF link 15, with an external communicating entity. The short range RF link 15 may be an NFC type link, a Bluetooth type link, a Wifi type link, a Zigbee type link or any other link allowing to communicate in a short range up to around some tens of meters with an external communicating entity, like a mobile terminal.

The microprocessor 142 processes, controls and communicates internally data, through the internal bidirectional data bus 143, with all the different other electronic components incorporated within the chip.

The microprocessor 142 is able to read data from, write data into and/or execute data stored within the memory 144. Furthermore, the microprocessor 142 controls access to data stored within the memory 144 and communicates, through the I/O interfaces 146, with the outside world.

The microprocessor 142 executes an Operating System (or OS) and at least one application stored within the memory 144.

The HPM memory 144 stores data, like a first device identifier and preferably a transaction identifier.

A first device identifier is preferably pre-defined during a personalisation of the HPM 14 during its manufacturing.

The first device identifier may be an International Mobile Subscriber Identity (or IMSI) or the like.

A transaction identifier may be pre-defined or generated by the HPM 14 as soon as it is powered on. The transaction identifier is used for identifying a request for accessing a service and a corresponding response. The transaction identifier allows diversifying the considered transaction context in which access to a service is requested from the HPM 14. For instance, the transaction may track a number of the successive power(s)/reset(s) of the Femtocell 12, prior to possibly sending a new service access request.

The HPM memory 144 stores one or several keys including a key k1.

The key k1 may be shared between the HPM 14 and a second remote server 112. When shared, the key k1 is used by the second remote server 112, so as to sign data to be sent. The key k1 is also used, as signature verification key, by the HPM 14, so as to verify, based upon data, as second remote server signature, to be received from the second remote server 112 the authenticity and the integrity of received data. The key k1 may be identified within data to be received from the second remote server 112. The transaction identifier may include a key identifier. Such a key identifier allows the second remote server 112 to retrieve a corresponding context, namely to identify a request for providing the HPM 14 with data for accessing a service, as a corresponding response.

The key k1 may be a symmetric or asymmetric key. As asymmetric key, the key k1 may be a public key relating to the second remote server 112.

The HPM memory 144 may store a private key relating to the HPM 14. Such a private key may be used for decrypting data that is encrypted by an HPM interlocutor by using a corresponding public key relating to the HPM 14. The encrypted data may originate over a short range RF link 15.

The HPM memory 144 may store a key Ki to be used for authenticating to a box or another NAP by using a short range RF link, like a Wifi one.

The HPM memory 144 may also securely store data relating to the Femtocell 12, such as a particular set of parameters (like a key(s)) and/or variables, to let operate the Femtocell 12.

The HPM memory 144 stores preferably data relating to a Uniform Resource Locator (or URL), a Uniform Resource Identifier (or URI) and/or an Internet Protocol (or IP) address of a first remote server 122 that is accessible through the Femtocell 12.

The HPM memory 144 may also store data relating to a URL, a URI and/or an IP address of a second remote server 112, as authorisation server that issues data for accessing a service and that is accessible through a second device.

According to an essential feature of the invention, the HPM 14, as first token and device, is arranged to involve a SIM type card 18, as second token and device, that has to authenticate its user, before authorizing any further data processing.

For sake of simplicity, the SIM type card 18 is termed hereinafter the card 18.

Prior to notably an authentication to the Femtocell 12 and therefore its activation, the HPM 14 ensures that the card 18 user is successfully authenticated to the card 18, as strong authentication factor.

The authentication of the card user to the card 18 allows giving, when successful, her/his explicit authorisation and intention to use the HPM 14 and, accordingly, her/his explicit authorisation and intention to use the Femtocell 12.

Thus, besides a possible ownership of the HPM 14 and its associated Femtocell 12, the card user authentication constitutes two authentication factors, namely a card 18 possession and a user knowledge of secret data, like a Personal Identity Number (or PIN), a password and/or a user possession of biometric data (like a fingerprint(s), a facial print(s) and/or a iris print(s)).

The HPM 14 initiates such a card user authentication by providing the card 18 with a service access request along with at least the HPM identifier. The HPM 14 may further provide the card 18 with a transaction identifier, so as to diversify the considered transaction context.

The HPM 14 is preferably arranged to address, via the short range RF link 15, the card 18.

The card 18 is coupled to a mobile phone 16, as user terminal and token host device.

The phone 16 is connected, over a bi-directional wireless link(s) 19, to one or several mobile radio-communication networks 110.

Instead of the mobile radio-communication network(s), it may be constituted by an Internet network accessible, via a contact-less link, like a Wifi or Bluetooth one, through a Femtocell or the like, as an intermediate entity and an Internet access point.

The mobile radio-communication network(s) 110 may be constituted by a Global Service for Mobiles (or GSM), a General Packet Radio Service (or GPRS), a Universal Mobile Telecommunications System (or UMTS), a Code Division Multiple Access (or CDMA) and/or a Long Term Evolution (or LTE) type network(s).

The mobile radio-communication network list is not exhaustive but only for exemplifying purposes.

The wireless link(s) 19 consist(s) of a long range RF link(s). The long range RF link(s) may be fixed at several hundreds of MHz, for instance, around 850, 900, 1800 and/or 1900 MHz.

The second remote server 112, as authorization server, is connected, over a bi-directional wire link 113, to the mobile radio-communication networks 110.

The second remote server 112 is preferably able to exchange, via a Transmission Control Protocol /Internet Protocol (or TCP/IP), a Bearer Independent

Protocol (or BIP) or a Short Message Service (or SMS) type channel, one or several messages.

The phone 16 comprises preferably a keyboard 162 allowing its user to enter and/or select data.

The phone 16 comprises preferably a display screen 164 allowing to display data to the phone user.

Alternately, instead two separate display screen and keyboard, the phone 16 comprises a display screen that integrates a touch sensitive keyboard, as virtual keyboard.

The keyboard 162 and the display screen 164 constitute a MMI or termed user interface.

The phone 16 is equipped preferably with a wireless antenna 166 for exchanging data, over the wireless link(s) 19, with the second remote server 112.

The phone 16 is contact-less enabled, i.e. is able to communicate, over a the short range RF link 15, with an external communicating entity.

According to a preferred embodiment, the phone 16 includes an NFC chip (not represented) or termed Contact-Less Fronted (or CLF) chip that cooperates with a contact-less antenna 168 for allowing the card 18 to exchange data, over the short range RF link 15, with an external communicating entity.

The short range RF may be fixed at, for instance, 13,56 MHz relating to an NFC technology, as contact-less technology.

Instead of integrating a contact-less antenna, the phone 16 is connected to a contact-less antenna 168 carried by an add-on device that is fixed to the Printed Circuit Board (or PCB), a part, like a case, or an accessory, like a battery, of the phone 16.

The phone 16 includes preferably at least one microprocessor (not represented), at least one memory (not represented) and at least two I/O interfaces.

The phone memory stores non-executable data and executable data, as at least one application.

As non-executable data, it may comprise:
- a Mobile Subscriber Integrated Services Digital network Number (or MSISDN) or termed phone number that allows to route or connect a call to the phone 16;
- an International Mobile Equipment Identity (or IMEI) or the like, as phone identifier; and/or
- a URI, a URL, or an IP address of the second remote server 112, as phone interlocutor.

The phone memory stores one or several applications. Among the applications, there is at least one application for cooperating with the card 18. Such a card cooperating application allows to let the card 18 exchange on the one hand, over the phone 16 user interface, with the phone user and, on the other hand, over the phone 16, as an intermediary entity, with the second remote server 112.

The phone microprocessor processes data originating from the phone memory and/or an external entity(ies), like the card 18 and/or the second remote server 112.

The phone 16 is coupled, through a bi-directional link 17, to the card 18.

Such a link 17 between the card 18 and the phone 16 is used notably for benefitting from the phone user interface. Such a link 17 between the card 18 and the phone 16 is further used for enabling the card 18 to communicate, through the short range RF link 15, with the HPM 14, as an external contact-less enabled communicating entity.

The phone I/O interfaces includes two I/O interfaces, so as to exchange data with the card 18.

The phone I/O interfaces with the card 18 may include a contact interface, like, for instance, an International Organization for Standardization (or ISO) 7816 type interface, when the card 18 is inserted within or connected to the phone 16.

The phone I/O interfaces with the card 18 may include a contact interface, through a Single Wire Protocol (or SWP), to the NFC chip.

The card 18, as second token, belongs to a user, namely a service subscriber. The token may have different form factors.

For instance, instead of a SIM type smart card, the token may be a SD type card, a micro-SD type card, a MMC or any card of another format, a smart dongle of the USB type, or a chip to be fixed to the phone 16, as user terminal and host device, possibly in a removable manner.

The card user has preferably subscribed to one or several services managed by the second remote server 112.

The card 18 is e.g. a SIM type smart card.

The card 18 is contact-less enabled.

The card 18 allows, in particular, authenticating a card 18 user, relaying, after a successful user authentication, a service access request originating from the HPM 14 to the second remote server 112 and relaying, as request response, data for accessing a service originating from the second remote server 112 to the HPM 14.

The card 18 comprises a chip.

The card 18 chip includes preferably at least one microprocessor 182, as data processing means, at least one memory 184, and at least two I/O interfaces 186 which are internally linked together through a data and control bus 183.

The card memory 184 stores user authentication data, like an authorized user PIN and/or biometric data (like a fingerprint(s), a facial print(s) and/or a iris print(s)) to be matched with user data input.

The card memory 184 stores data for identifying the chip, such as an IMSI and/or an Integrated Circuit Card Identifier (or ICCID), as a unique token identifier.

The IMSI is used for identifying a user and subscriber in relation with one or several mobile radio-communication networks 110.

The card memory 184 stores one or several SIM type applications.

The SIM type applications allow the phone 16 to authenticate to the second remote server 112.

The SIM type applications may include, for instance, a SIM for a GSM network, a Universal Subscriber Identity Module (or USIM) for a UMTS network, a CDMA Subscriber Identity module (or CSIM) for a CDMA network, a Removable User Identity Module (or RUIM) for GSM, UMTS and CDMA networks, and/or an Internet protocol multimedia Services Identity Module (or ISIM) for IP Multimedia Subsystem (or IMS).

The card I/O interfaces 186 include preferably an ISO 7816 type interface and a SWP type interface, so as to let communicate, through the bi-directional link 17, the card 18 and the phone 16.

The card microprocessor 182 is able to initiate actions, in order to interact directly with the outside world, in an independent manner of the phone 16, as host device. Such a capacity of interaction at the initiative of the card 18 is also known as proactive capacity. The card 18 is thus able to send, at its own initiative, to the phone 16 a proactive command, like a known "Display text" command, for displaying, through the phone display screen 164, a message for prompting a user to enter, through the phone 16 user interface, a PIN and/or biometric data, as user authentication data.

The card microprocessor 182 executes preferably security functions, in order to protect access to user information stored and managed through or by the card 18.

The security functions include preferably a user authentication process. The user authentication process may be used before reading data stored within the card memory 184. To authenticate the user, the card 18 stores an application for verifying user authentication data stored securely within the card memory 184 and to be input by the card user. Thus, the card 18 compares user input with the stored user authentication data and authorize, when successful, a further prosecution, like a forwarding of a request for accessing a service originating from the HPM 14 along with at least the HPM identifier.

The security functions include preferentially an encryption/decryption process to be used before sending data to outside/after receiving data from outside, so as to protect access to data managed by the card 18. To encrypt data to be sent, the card 18 uses an encryption key and an encryption algorithm, such as an Advanced Encryption Standard (or AES), a Data Encryption Standard (or DES) or the like, that are both stored within the card memory 184. To decrypt data to be received, the card 18 uses a decryption key and a decryption algorithm, such as an AES, a DES or the like, that are both stored within the card memory 184.

The card memory 184 stores at least one key, as card signature key. The card signature key is used for signing data to be sent to an interlocutor, like the second remote server 112. The generated card signature allows its receiver to verify that the originator of the data is the known sender, i.e. the card is recognized and authenticated as sender and is not able to deny having sent the data. The generated card signature also allows its receiver to verify that the sent data has not been altered or modified during its transmission. The authenticity and the integrity of the data sent by the card 18 are thus verified by a receiver of the sent data.

The card signature key is preferably a private key relating to the card 18. The card memory 184 stores a corresponding public key relating to the card 18. Such a public key relating to the card 18 is to be used, as second key k2, by another device, like, for instance, the second remote server 112, for verifying the card 18 signature. The second key k2 is used by the second remote server 112, so as to verify the authenticity and the integrity of data that is sent by the card 18. The second key k2 is used by the second remote server 112, so as to verify, based upon data, as card 18 signature, to be received from the card 18 the authenticity and the integrity of data originating from the card 18. The second key k2 may be identified within data to be received from the card 18 by the second remote server 112.

To sign data to be sent, the card 18 uses a predetermined signature algorithm, like a Rivest Shamir Adleman (or RSA) algorithm, and a predetermined signature key. The predetermined signature key may be either a private key relating to the card 18 or a key shared between the card 18 and the second remote server 112.

The card memory 184 stores the signature algorithm. The interlocutor, namely the second remote server 112, verifies corresponding signed data by using a predetermined signature verification algorithm and a predetermined signature verification key. The signature verification key may be either a public key relating to the card 18 that has been deduced from the card 18 private key or the key shared between the card 18 and the second remote server 112.

The card memory 184 stores preferably a signature verification algorithm(s) and a signature verification key(s). Each signature verification key is preferably related to a card 18 interlocutor, as public key related to the interlocutor device. The card 18 interlocutor(s), namely the HPM 14 and/or the second remote server 112, sign(s) data by using a predetermined signature algorithm and a predetermined signature key. The card interlocutor signature key may be a private key relating to the card 18 interlocutor device, like the second remote server 112.

According to one particular embodiment, the signature algorithm and the signature verification algorithm are one and the same algorithm, like a Message Authentication Code (or MAC) algorithm. Likewise, the signature key and the signature verification key constitute one and the same key, as a symmetric key shared between the card 18 and its interlocutor(s), like the second remote server 112 and/or the HPM 14.

The card memory 184 stores, as executable data, several applications, namely at least an application for verifying user authentication data and an application for requesting access to a service.

The application for verifying user authentication data consists in comparing user input with the stored user authentication data and authorizing, when successful, a further prosecution, like a running of the application for requesting access to a service.

The application for requesting access to a service is to be launched after a successful card user authentication.

The application for requesting access to a service allows the card 18 to send to the second remote server 112 a request for accessing a service accompanied with at least an HPM identifier to be received from the requester and the stored IMSI or the like, as user identifier. The request for accessing a service may be further accompanied with a transaction identifier to be received from the requester. The request for accessing a service may be further accompanied with a second key identifier, so as to indicate the signature key used by the card 18 for signing data. The request for accessing a service may be further accompanied with a random number, so as to avoid an anti-replay attack.

The application for requesting access to a service allows the card 18 to receive from the second remote server 112 a request response accompanied with at least the HPM identifier and data for accessing a service.

The second remote server 112 is identified within either data directly stored by the phone 16 or data stored within the card memory 184.

The second remote server 112 is preferably accessible from the HPM 14, through a SIM type card 18, as a second token or device, via a mobile radio-communication network(s) 110.

The second remote server 112 is hosted by a computer including data processing means.

The second remote server 112 may be operated by a mobile radio-communication network operator, a service provider, or on its behalf.

The second remote server 112 plays a role of a provider of data for accessing a service.

The data for accessing a service may include a One Time Password (or OTP), credentials and/or the like, so as to authenticate to either a NAP that is connected to the service provider network 120 or the service provider network 120.

Rules for accessing the service may be defined.

The rules for accessing the service are taken into account so as to forbid or authorize access to the concerned service.

The rules for accessing the service may encompass, for each subscriber, a user profile(s) that is(are) eligible for accessing the service and/or other kind of access condition(s), like an entitlement corresponding to the authorization, e.g. a predetermined number of an authorized successive power(s)/reset(s) of the paired Femtocell 12 before requesting a new authorization.

The second remote server 112 performs preferably security functions, in order to protect access to information stored and managed through or by the second remote server 112.

The second remote server 112 may be able to delegate to another server, as another server (not represented) that is connected to the second remote server 112 one or several security functions, like a data decryption, a data encryption, a generation of a second server signature, a verification of data authenticity and/or integrity.

The security functions include preferentially an encryption/decryption process to be used before sending data to outside/after receiving data from outside, so as to protect access to data managed by the second remote server 112. To encrypt data to be sent, the second remote server 112 uses an encryption key and an encryption algorithm, such as an AES, a DES or the like, that are both accessible from the second remote server 112. To decrypt data to be received, the second remote server 112 uses a decryption key and a decryption algorithm, such as an AES, a DES or the like, that are both accessible from the second remote server 112.

The server memory stores at least one server signature key. The server signature key is used for signing data to be sent to an interlocutor, like the card 18 and the HPM 14. The generated server signature allows its receiver to verify that the originator of the data is the known sender, i.e. the second remote server 112 is authenticated as sender. The generated server signature also allows its receiver to verify that the sent data has not been altered or modified during its transmission. The authenticity and the integrity of the data sent by the second remote server 112 are thus verified by a receiver of the sent data.

The server signature key may be shared with each server 112 interlocutor device(s), e.g. the card 18 and/or the HPM 14, i.e. the server 112 interlocutor device(s) store(s) the server signature key.

The server signature key may be a private key relating to the second remote server 112. The server memory and the server interlocutor device(s) store a corresponding public key relating to the second remote server 112. Such a public key relating to the second remote server 112 is to be used by a server 112 interlocutor device, like, for instance, the HPM 14 and/or the card 18, as a key for verifying the server 112 signature. A corresponding server signature verification key is used by the server 112 interlocutor device, so as to verify, based upon data, as server 112 signature, to be received from the second remote server 112 the authenticity and the integrity of data originating from the second remote server 112. The server signature key may be identified within data to be received from the second remote server 112 by the server interlocutor device.

To sign data to be sent, the second remote server 112 uses a predetermined signature algorithm, like a RSA algorithm, and a predetermined server signature key.

The server memory stores preferably a signature algorithm(s). The server 112 interlocutor device(s), namely the card 18 and/or the HPM 14, verifies corresponding signed data by using a predetermined signature verification algorithm and a predetermined signature verification key.

The server memory stores preferably a signature verification algorithm and a signature verification key for each server interlocutor device.

The signature verification key may be a symmetric or asymmetric key.

The signature verification key may be a pre-shared key, as symmetric key, between the second remote server 112 and a server interlocutor device, e.g. the HPM 14 and/or the card 18.

The signature verification key may be a public key, as asymmetric key, relating to the interlocutor device. The server interlocutor device(s), e.g. the HPM 14 and/or the second card 18, sign(s) data by using a predetermined signature algorithm and a predetermined signature key. The server interlocutor signature key is a private key relating to the server interlocutor device(s), like the HPM 14 and/or the second card 18.

According to one particular embodiment, the signature algorithm and the signature verification algorithm are one and the same algorithm, like a MAC algorithm. Likewise, the signature key and the signature verification key constitute one and the same key, as a symmetric key shared between the second remote server 112 and its interlocutor device(s), like the card 18 and/or the HPM 14.

The second remote server 112 is dedicated to running an application for managing a database relating to at least one service and communicating some information included within the database to outside.

The second remote server 112 accesses a memory (not represented), also termed server memory.

The second remote server 112 includes or is connected to the server memory.

The server memory stores preferably a private key relating to the second remote server 112. The second remote server private key may be used to encrypt and/or sign data to be sent.

The server memory stores preferably a public key relating to the second remote server 112. The second remote server public key relating to the second remote server 112 may be used to decrypt encrypted data and/or verify a server signature of data that is received from the second remote server 112.

The server memory stores the database.

The database registers a plurality of subscribers. Each subscriber is associated with at least one identifier relating to a user, like an IMSI, and data relating to an associated device(s), like an HPM identifier and possibly other device data.

For one subscriber, several devices, like an HPM, as first token, a Femtocell, a card, as second token, and a mobile phone, as user terminal, with other related data may be registered within the database.

The database includes preferably, for each subscriber, a predetermined signature algorithm and a predetermined signature key.

The database includes preferably, for each subscriber, and a predetermined signature verification algorithm and a predetermined signature verification key.

The database includes preferably, for each subscriber, data for accessing a service.

The second remote server 112 or another server connected to the second remote server 112 is preferably able to generate, for each subscriber, data for accessing a service. The data for accessing a service is to be sent within a response to a corresponding service access request to be received from an external device, like the HPM 14.

The second remote server 112 is able to manage numerous authorization requests originating from numerous HPMs (not represented) while using one or several differentiation parameters (like the HPM identifier(s) and/or the transaction identifier(s)).

**Figure 2** shows an example of a message flow 20 that involves the HPM 14, as first token, the card 18, as second token, the phone 16 and the second remote server 112, so as to exchange, between the HPM 14 and the second remote server 112, data in a secure manner.

For sake of simplicity and clarity, the second remote server 112 is termed herein below the server 112.

In the explained example, the card 18 user (and the phone user) desires to access a service that is accessible from the Femtocell 12 that is coupled to the HPM 14 that is used by the card 18 user.

It is assumed that the HPM 14 is coupled to the Femtocell 12 that has either no user interface or a limited user interface with, e.g. only one button to switch power on or off. However, the invention is also applicable to a Femtocell 12 that is equipped with a user interface that may not be accessible or not sufficiently trustable in terms of security.

It is assumed that the HPM 14 and the card 18 are both NFC enabled. To exchange data through an NFC link, the distance between the HPM 14 and the card 18 is typically up to 20 cm.

The card 18 may have to use a public key relating to the HPM 14 and to be read in an optical manner, so as to encrypt data to be exchanged, over an NFC link, between the card 18 and the HPM 14.

As soon as the card 18 (and its hosting phone 16) is close enough to the HPM 14, the HPM 14 sends to the card 18 a first message 22 including a request for accessing a service accompanied with an HPM identifier. The first message 22 may further include a transaction identifier.

The first message 22 may include a URL, URI, an IP address and/or an operator realm of the server 112, so as to identify an addressee of a service access request to be sent.

The card microprocessor 182 launches an execution of the application for verifying user authentication data.

Then, the card 18 sends to the phone 16 a request 24 for entering e.g. a PIN, a password, credentials or the like, as user authentication data, like a command "Display text" along with a message to be displayed, like "please enter your PIN", so as to prompt its user to enter, through the phone 16 user interface, a user PIN.

The card 18 user, as authorized user, enters data, as PIN, by using the phone keyboard 162.

Once the card 18 user has entered data, the phone 16 sends back to the card 18 the entered data 26.

The card 18 verifies whether the entered data does or does not match the stored PIN.

If the entered data does not match the stored PIN, then the card 18 forbids any further data processing and aborts the method for accessing a service that has been launched by the HPM 14.

On the contrary, i.e. if the entered data matches the PIN, the card 18 authorizes a further data processing. The card 18 user, as Femtocell 12 hosting party, is not able to repudiate the use of the Femtocell 12 since she/he has explicitly given her/his authentication data.

The card microprocessor 182 launches an execution of the application for requesting access to a service after a successful card user authentication.

The card 18 generates preferably a card 18 signature based upon data to be sent, namely at least the HPM 15 identifier and the user identifier, and a first signature key. The first signature key may be symmetric or asymmetric. When symmetric, the first signature key is shared between the card 18 and the server 112.

The mobile phone user may have to move while carrying the mobile phone with the card 18, so as to be able to access the mobile radio-communication network 110.

The card 18 sends to the server 112, e.g. an SMS type message, as second message 28. The second message 28 includes, as service access request, a request for accessing a service accompanied with the HPM identifier and the IMSI or the like, as card 18 identifier and user identifier.

The data included within the second message is preferably encrypted by using an encryption key, so as to protect access to the data thus exchanged. The encryption key is either a public key relating to the server 112 or a key shared between the card 18 and the server 112.

The second message 28 may further include an identifier relating to a transaction, an identifier relating to the card signature key, and/or a random number, as additional data to be sent. The additional data to be sent allows enhancing the security of the exchange between the card 18 and the server 112.

The transaction identifier is either received from the HPM 14 and transferred by the card 18 or issued from the card 18. The transaction identifier allows to change a transaction context.

The second message 28 includes preferably the card 18 signature.

The key identifier may allow the server 112 to retrieve the key, amongst several keys, that is used by the card 18 for signing data and/or the key that is used by the server 112 for signing data to be sent to the card 18. The key identifier may allow the server 112 to retrieve the key that is used by the card 18 for encrypting data to be sent to the server 112 and/or the key that is used by the server 112 for encrypting data to be sent to the card 18.

The random number allows avoiding an anti-replay attack.

Once the second remote server 112 receives the second message 28, the server 112 decrypts preferably received encrypted data that is included within the second message 28 by using a decryption key. The decryption key is either a private key relating to the server 112 or a key shared between the card 18 and the server 112.

The second message 28 may have been completed by the card 18 and/or a mobile network entity by adding a Global Positioning System (or GPS) type information and/or information relating to a currently occupied cell, as data for locating the phone 16 and therefore the Femtocell 12 (that is near to the phone 16).

The server 112 verifies preferably, based upon the card 18 signature, the authenticity and the integrity of the data included within the received second message 28.

If such a server verification is not successful, then the server 112 forbids to transmit to the request sender data for accessing a service.

If such a server verification is successful, then the server 112 authorizes to send to the request sender data for accessing a service. The server 112 retrieves data for accessing to a service that is to be allocated to the originator of the request, namely the HPM 14.

If the HPM 14 is not already registered as being associated with the card 18, then the remote server 112 may either update the database while associating the HPM 14 with the card 18 if the identified user is eligible with respect to rules for accessing the service or forbid to provide the non-registered HPM 14 with data for accessing a service.

When the Femtocell 12 location data is present, the server 112 may update its database while associating the Femtocell 12 location data with the HPM 14 relating data.

Prior to retrieving data for accessing to a service, the server 112 (or another server connected to it) generates data for accessing a service and associates the generated data for accessing a service with the HPM 14 identifier.

The server 112 (or another server connected to it) generates preferably a first server signature based upon data to be sent to the HPM 14, namely at least the data for accessing a service, and a first server signature key. The data to be sent to the HPM 14 may further include a transaction identifier, information relating to the entitlement and/or an identifier of the first server signature key that is used for generating the first server signature. The first server signature key may be symmetric or asymmetric. When symmetric, the first server signature key is shared between the HPM 14 and the server 112. The data for accessing the service being intended to the HPM 14 includes the first server signature.

According to a preferred embodiment, the server 112 (or another server connected to it) generates preferably a second server signature based upon data to be sent to the card 18, namely at least the HPM 14 identifier and the data for accessing a service, and a second server signature key. The data to be sent to the card 18 may further include a transaction identifier and/or a random. The second server signature key may be symmetric or asymmetric. When symmetric, the second server signature key is shared between the card 18 and the second remote server 112. When symmetric, the second server signature key may be identified by an identifier relating to the key that has also been received within the first message 28.

The server 112 identifies, thanks to the card 18 identifier and/or user identifier, an addressee of a request response to be sent by retrieving a card 18 hosting device identifier, e.g. a MSISDN, that is associated with the card 18.

The server 112 sends, through the identified phone 16, to the card 18, e.g. an SMS type message, as a third message 210 that includes the HPM 14 identifier and data for accessing a service, as request response.

The third message 210 includes preferably the second server signature.

Besides the HPM 14 identifier and the data for accessing a service, the third message 210 may further include an identifier relating to the second server signature key that is used for signing data to be sent to the card 18.

When the second server signature is present, the card 18 extracts within the received third message 210, the second server signature. The card 18 verifies preferably, based upon the second server signature, the authenticity and the integrity of the data included within the received third message 210 and intended to the card 18. If required, the card 18 retrieves the second server signature key and/or the random based upon the HPM 14 identifier and possibly the transaction identifier that have been sent within the second message 28.

If such a card 18 verification is not successful, then the card 18 forbids to forward the data for accessing a service included within the third message 210 and intended to the HPM 14 that is identified.

Otherwise, i.e. if such a card 18 verification is successful, the card 18 authorizes to send the data for accessing a service included within the third message 210 and intended to the HPM 14 that is identified.

Then, the card 18 sends to the HPM 14 a fourth message 212 that includes the data for accessing a service.

When the first server signature is present within the fourth message 212, the HPM 14 extracts within the received fourth message 212, the first server signature. The HPM 14 verifies, based upon the first server signature and the transaction identifier when present within the fourth message 212, the authenticity and the integrity of the data for accessing a service. The HPM 14 uses a transaction identifier to retrieve the request/response message context and possibly a first server signature key comprised within the transaction identifier.

If such a HPM 14 verification is not successful, then the HPM 14 forbids to transmit to take into account the data for accessing a service included within the received fourth message 212.

Otherwise, i.e. if such a HPM 14 verification is successful, the HPM 14 authorizes to use the data for accessing a service included within the received fourth message 212. The HPM 14 may use, when present within the data for accessing a service, entitlement information for a corresponding entitlement, e.g. a given number of the successive power(s)/reset(s) of the Femtocell 12 to be tracked prior to sending possibly a new service access request from the HPM 14.

The Femtocell 12 may thus be activated in a temporary or definitive manner depending on the rules for accessing a service.

The invention solution is secure since data is exchanged between the HPM 14, the card 18, the phone 16 and the server 112 only if the card 18 user is effectively authenticated. Moreover, the invention solution may be more secure while exchanging in an encrypted manner and/or while signing data each time that a device is involved so as to provide the HPM 14 with data for accessing a service.

Moreover, the invention solution is user friendly since the HPM 14/Femtocell 12 activation process is improved and does not need to involve the user except for the card 18 user authentication.

The invention solution allows not to modify any existing hardware neither at the Femtocell 12 side nor at the HPM 14 side not at the mobile network side.

The embodiment that has just been described is not intended to limit the scope of the concerned invention. Other embodiments may be given. Another embodiment may be, instead of the HPM 14, a Femtocell is a first device that exchanges, through the card 18, with the server 112, so as to be provided with data for accessing a service.

## Claims

1. A method (20) for accessing a service,
**characterized in that**, a first device (14) comprising at least one first memory (144), the first memory storing a first device identifier, a second device (18) comprising at least one second memory (184), the second device comprising or being connected to a user interface (162, 164), the second memory storing user authentication data and a user identifier, the method comprises the following steps:
- the first device sends to the second device a first message (22) including a request for accessing a service accompanied with the first device identifier;
- the second device prompts its user to enter, through the user interface, data;
- the second device verifies whether the entered data does or does not match the user authentication data;
- only if the entered data matches the user authentication data, then the second device sends to a server (112) a second message (28) including a request for accessing a service accompanied with the first device identifier and the user identifier;
- the server sends to the second device a third message (210) including the first device identifier and data for accessing a service, as request response; and
- the second device sends to the first device a fourth message (212) including the data for accessing a service.

2. Method according to claim 1, wherein the method further comprises the step in which the second device generates a first signature based upon the first device identifier, the user identifier and a first key and the second message includes the first signature.

3. Method according to claim 2, wherein, besides the first device identifier, the user identifier and the request for accessing a service, the second message includes an identifier relating to the first key.

4. Method according to claim 2 or 3, wherein, besides the first device identifier, the user identifier and the request for accessing a service, the second message includes a random number.

5. Method according to any of claims 2 to 4, wherein the second message includes the first signature and the server verifies, based upon the first signature, the authenticity and the integrity of the data included within the second message.

6. Method according to any previous claim, wherein the method further comprises the step in which the server generates a second signature based upon the first device identifier, the user identifier and a second key.

7. Method according to claim 6, wherein, besides the first device identifier and the data for accessing a service, the third message includes a second key identifier.

8. Method according to claim 6 or 7, wherein the third message includes the second signature and the second device verifies, based upon the second signature, the authenticity and the integrity of the data for accessing a service.

9. Method according to any previous claim, wherein the method further comprises the step in which the server generates a third signature based upon the first device identifier, the user identifier, and a third key, the third message includes the third signature and the first device verifies, based upon the third signature, the data for accessing a service based upon a third key that is shared between the first device and the server.

10. A system (10) for accessing a service,
**characterized in that**, a first device (14) comprising at least one first memory (144), the first memory storing a first device identifier, a second device (18) comprising at least one second memory (184), the second device comprising or being connected to a user interface (162, 164), the second memory storing user authentication data and a user identifier, the system comprising the first device, the second device and a server, the first device is adapted to send to the second device a first message (22) including a request for accessing a service accompanied with the first device identifier;
**in that** the second device is adapted to:
- prompt its user to enter, through the user interface, data;
- verify whether the entered data does or does not match the user authentication data;
- send to a server, only if the entered data matches the user authentication data, a second message (28) including a request for accessing a service accompanied with the first device identifier and the user identifier;
**in that** the server is adapted to send to the second device a third message (210) including the first device identifier and data for accessing a service, as request response; and
**in that** the second device is adapted to send to the first device a fourth message (212) including the data for accessing a service.
